# FASCICULE DE BREVET EUROPEEN

(11) **EP 4 056 475 B1**
(45) Date de publication et mention de la délivrance du brevet: **26.04.2023**
(21) Numéro de dépôt: 22152932.4
(22) Date de dépôt: 24.01.2022
(51) Int. Cl.: B64D 13/00, B64D 15/04, B64D 37/34, F02C 7/224

(54) **AÉRONEF COMPORTANT UN MOTEUR ET UN SYSTÈME DE REFROIDISSEMENT**
LUFTFAHRZEUG, DAS EINEN MOTOR UND EIN KÜHLSYSTEM UMFASST
AIRCRAFT INCLUDING AN ENGINE AND A COOLING SYSTEM

(30) Priorité: 10.03.2021 FR 2102348
(43) Date de publication de la demande: 14.09.2022
(73) Titulaire: Airbus Operations (S.A.S.), 31060 Toulouse Cedex 9 (FR)
(72) Inventeur: ZEBIAN, Maxime, 31060 Toulouse (FR); BOURGALET, Davy, 31060 Toulouse (FR)
(74) Mandataire: Jardel, Marc Henry Philippe

(56) Documents cités:
- CN-A- 106 882 390
- US-A- 4 550 561
- US-A1- 2015 268 073
- US-A1- 2016 025 339
- US-A1- 2020 108 937

## Description

### DOMAINE TECHNIQUE

La présente invention concerne un aéronef comportant un moteur et un système de refroidissement.

### ÉTAT DE LA TECHNIQUE ANTÉRIEURE

Un aéronef comporte classiquement un fuselage qui délimite une cabine pour des passagers et du personnel de bord. Dans la description, le terme « cabine » inclut non seulement la cabine dans laquelle sont assis les passagers, mais également le cockpit. L'aéronef comporte également des moyens de dégivrage par exemple pour dégivrer les ailes. La cabine et les moyens de dégivrage constituent des dispositifs à chauffer.

L'aéronef comporte également au moins un turboréacteur qui permet d'entraîner l'aéronef et qui est alimenté en kérosène depuis un réservoir.

L'aéronef comporte également un système de conditionnement d'air qui prélève de l'air chaud au niveau du turboréacteur, qui régule la température de l'air ainsi prélevé et qui envoie l'air ainsi régulé vers les dispositifs à chauffer dont la cabine pour en réguler la température et les moyens de dégivrage.

Le système de conditionnement comporte ainsi des échangeurs thermiques, des filtres, des canalisations, des vannes etc..., et il capte l'air chaud du turboréacteur pour le traiter et le renvoyer vers sa destination, en particulier, vers les dispositifs à chauffer.

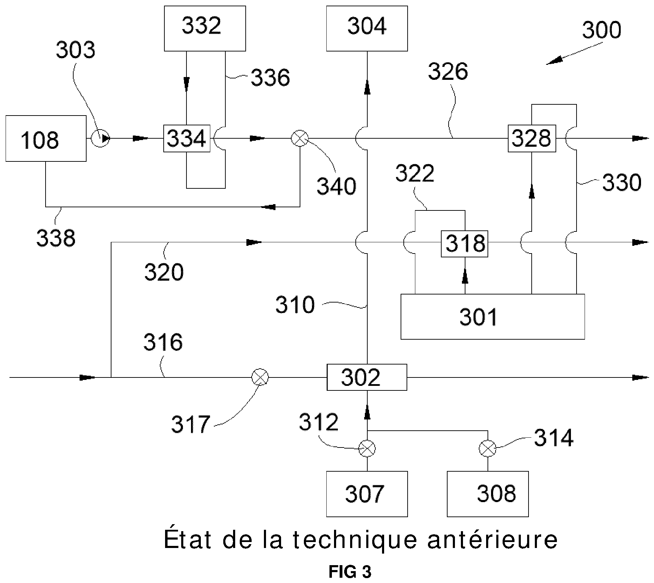

La figure 3 est une représentation schématique d'un tel aéronef 300 de l'état de la technique. L'aéronef 300 comporte un turboréacteur 301 qui incorpore entre autres une boîte de transmission et qui comporte également une soufflante disposée dans un canal de soufflante et destinée à générer un flux d'air dans le turboréacteur 301 selon une direction de déplacement de l'air dans le turboréacteur 301, où de manière connue, le flux d'air se déplace ensuite en aval de la soufflante dans une veine primaire ou bien dans une veine secondaire du turboréacteur 301.

Le turboréacteur 301 comporte également un compresseur moteur qui comporte un compresseur basse pression en aval de la soufflante et un compresseur haute pression en aval du compresseur basse pression, et une turbine moteur qui comporte une turbine haute pression en aval du compresseur haute pression, et une turbine basse pression en aval de la turbine haute pression.

L'air poussé par la soufflante et transitant dans la veine primaire passe successivement à travers le compresseur basse pression, le compresseur haute pression, la turbine haute pression, et la turbine basse pression, pour être éjecté vers l'extérieur. Entre le compresseur haute pression et la turbine haute pression, l'air traverse une chambre de combustion où il est mélangé au carburant afin de brûler ce dernier.

Le compresseur haute pression comporte plusieurs étages de compression où la pression augmente, de l'amont vers l'aval selon la direction de déplacement, d'une basse pression au niveau du premier étage, à une haute pression au niveau du dernier étage, en passant par des pressions intermédiaires dans les étages intermédiaires.

L'aéronef 300 comporte également des dispositifs à chauffer 304 (cabine, moyens de dégivrage) et un système de conditionnement d'air. Le système de conditionnement d'air comporte un premier échangeur thermique 302, une première prise d'air 307 destinée à prélever, dans le compresseur haute pression, de l'air à basse pression ou à pression intermédiaire, une deuxième prise d'air 308 destinée à prélever, dans le compresseur haute pression, de l'air à haute pression.

Le système de conditionnement d'air comporte également une première canalisation 310 qui traverse le premier échangeur thermique 302 et alimente les dispositifs à chauffer 304 en aval du premier échangeur thermique 302. En amont du premier échangeur thermique 302, la première canalisation 310 se divise en deux sous-canalisations, dont l'une est fluidiquement connectée à la première prise d'air 307 et dont l'autre est fluidiquement connectée à la deuxième prise d'air 308. Chaque sous-canalisation est ici équipée d'une vanne 312, 314 qui permet de réguler le passage de l'air provenant de chaque prise d'air 307, 308 en fonction des besoins de l'aéronef 300 et à cette fin, l'aéronef 300 comporte une unité de contrôle destinée à commander les vannes 312 et 314 en ouverture et en fermeture.

Le système de conditionnement d'air comporte également une première canalisation d'air 316 qui alimente le premier échangeur thermique 302 avec de l'air prélevé dans le canal de soufflante. Pour réguler le débit d'air entrant dans le premier échangeur thermique 302, la première canalisation d'air 316 est équipée, à l'entrée dudit premier échangeur thermique 302, d'une vanne 317 installée sur la première canalisation d'air 316 et commandée en ouverture et fermeture par l'unité de contrôle.

Ainsi, l'air chaud prélevé au niveau des prises d'air 307 et 308 est refroidi au passage à travers le premier échangeur thermique 302 par l'air frais prélevé au niveau du canal de soufflante qui est alors réchauffé et rejeté vers l'extérieur, tandis que l'air refroidi est dirigé vers les dispositifs à chauffer 304 à travers la première canalisation 310.

Afin d'assurer le refroidissement du turboréacteur 301, l'aéronef 300 comporte un deuxième échangeur thermique 318 qui est destiné à effectuer un échange thermique entre un flux d'air provenant du canal de soufflante et un flux d'huile provenant du turboréacteur 301.

À cette fin, l'aéronef 300 comporte une deuxième canalisation d'air 320 qui prélève de l'air dans le canal de soufflante pour alimenter le deuxième échangeur thermique 318, et un premier circuit d'huile 322 prélevant de l'huile du turboréacteur 301 et réinjectant cette huile après passage à travers le deuxième échangeur thermique 318.

Ainsi, l'huile chaude prélevée au niveau du turboréacteur 301 est refroidie au passage à travers le deuxième échangeur thermique 318 par l'air frais prélevé au niveau du canal de soufflante qui est alors réchauffé et rejeté vers l'extérieur, tandis que l'huile refroidie est dirigée vers le turboréacteur 301.

L'aéronef 300 comporte un réservoir de carburant 108 qui permet de stocker du kérosène et une canalisation de carburant 326 qui alimente la chambre de combustion du turboréacteur 301. Une pompe 303 est agencée en sortie du réservoir de carburant 108 pour entraîner le carburant dans la canalisation de carburant 326.

Afin d'assurer un meilleur refroidissement du turboréacteur 301, l'aéronef 300 comporte un troisième échangeur thermique 328 qui est destiné à effectuer un échange thermique entre le carburant provenant du réservoir de carburant 108 et un flux d'huile provenant du turboréacteur 301.

À cette fin, la canalisation de carburant 326 prélève du carburant dans le réservoir de carburant 108 pour alimenter le troisième échangeur thermique 328, et un deuxième circuit d'huile 330 prélevant de l'huile du turboréacteur 301 et réinjectant cette huile après passage à travers le troisième échangeur thermique 328.

Ainsi, l'huile chaude prélevée au niveau du turboréacteur 301 est refroidie au passage à travers le troisième échangeur thermique 328 par le carburant prélevé dans le réservoir de carburant 108 qui est alors réchauffé et acheminé vers la chambre de combustion, tandis que l'huile refroidie est dirigée vers le turboréacteur 301.

L'aéronef 300 comporte également un générateur électrique 332 qui génère un courant électrique pour alimenter l'aéronef 300. Pour assurer le refroidissement du générateur électrique 332, l'aéronef 300 comporte un quatrième échangeur thermique 334 qui est destiné à effectuer un échange thermique entre le carburant provenant du réservoir de carburant 108 et un flux d'huile provenant du générateur électrique 332.

À cette fin, la canalisation de carburant 326 prélève du carburant dans le réservoir de carburant 108 pour alimenter le quatrième échangeur thermique 334, et un troisième circuit d'huile 336 prélevant de l'huile du générateur électrique 332 et réinjectant cette huile après passage à travers le quatrième échangeur thermique 334.

Ainsi, l'huile chaude prélevée au niveau du générateur électrique 332 est refroidie au passage à travers le quatrième échangeur thermique 334 par le carburant prélevé dans le réservoir de carburant 108 qui est alors réchauffé et acheminé vers la chambre de combustion, tandis que l'huile refroidie est dirigée vers le générateur électrique 332.

Dans le mode de réalisation présenté ici, le quatrième échangeur thermique 334 est en amont du troisième échangeur thermique 328 sur la canalisation de carburant 326, et cette dernière traverse donc successivement le quatrième échangeur thermique 334 puis le troisième échangeur thermique 328 avant de rejoindre la chambre de combustion.

L'aéronef 300 comporte également une canalisation de retour 338 fluidiquement connectée entre la canalisation de carburant 326 et le réservoir de carburant 108 au niveau d'une vanne 340 installée sur la canalisation de carburant 326 entre le quatrième échangeur thermique 334 et le troisième échangeur thermique 328 et commandée en ouverture et fermeture par l'unité de contrôle. Ainsi, le carburant peut refroidir l'huile du générateur électrique 332 et retourner dans le réservoir de carburant 108 sans que le carburant soit envoyé vers la chambre de combustion.

Bien qu'une telle installation soit performante, il est nécessaire d'utiliser un premier échangeur thermique qui soit de grandes dimensions pour assurer un refroidissement suffisant.

Les documents CN 106 882 390 A et US 2020/108937 A1 décrivent des systèmes de conditionnement de l'air chaud du turboréacteurs.

Il est donc nécessaire de trouver une installation différente pour laquelle le premier échangeur thermique soit plus petit et donc moins encombrant et moins lourd.

### EXPOSÉ DE L'INVENTION

Un objet de la présente invention est de proposer un aéronef comportant un moteur et un système de refroidissement qui permet l'utilisation d'un échangeur thermique de plus petite dimension que dans le cas de l'état de la technique.

À cet effet, est proposé un aéronef comportant :
- un moteur comportant un compresseur haute pression à plusieurs étages de compression, une chambre de combustion et un canal de soufflante,
- un réservoir de carburant contenant du carburant,
- des dispositifs à chauffer,
- une première prise d'air destinée à prélever, dans le compresseur haute pression, de l'air à une basse pression ou à une pression intermédiaire, une deuxième prise d'air destinée à prélever, dans le compresseur haute pression, de l'air à une haute pression,
- un premier échangeur thermique,
- une première canalisation qui traverse le premier échangeur thermique et alimente les dispositifs à chauffer en aval du premier échangeur thermique, où en amont du premier échangeur thermique, la première canalisation se divise en deux sous-canalisations, dont l'une est fluidiquement connectée à la première prise d'air et dont l'autre est fluidiquement connectée à la deuxième prise d'air,
- une canalisation de carburant fluidiquement connectée entre le réservoir de carburant et la chambre de combustion du moteur, et
- une première canalisation d'air qui alimente le premier échangeur thermique avec de l'air prélevé dans le canal de soufflante,
- un échangeur thermique additionnel installé sur la première canalisation en amont du premier échangeur thermique et en aval des prises d'air,
- une canalisation de dérivation dont une première branche est fluidiquement connectée entre la canalisation de carburant et une entrée de l'échangeur thermique additionnel et dont une deuxième branche est fluidiquement connectée entre une sortie de l'échangeur thermique additionnel et la canalisation de carburant, et
- une canalisation de contournement mise en place sur la première canalisation fluidiquement connectée de part et d'autre du premier échangeur thermique, et une vanne mise en place sur la canalisation de contournement et commandée en ouverture et fermeture.

L'utilisation du carburant pour refroidir l'air permet d'utiliser un premier échangeur thermique plus petit et donc moins encombrant.

Avantageusement, la connexion de la première branche sur la canalisation de carburant est en amont de la connexion de la deuxième branche sur la canalisation de carburant par rapport au sens d'écoulement du carburant dans la canalisation de carburant.

Avantageusement, chaque branche de la canalisation de dérivation est équipée d'une vanne installée sur ladite branche et commandée en ouverture et fermeture.

Avantageusement, entre les connexions de la canalisation de dérivation sur la canalisation de carburant, la canalisation de carburant est équipée d'une vanne commandée en ouverture et fermeture.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue de côté d'un aéronef selon l'invention,
- la figure 2 est une représentation schématique d'un aéronef selon l'invention, et
- la figure 3 est une représentation schématique d'un aéronef de l'état de la technique.

### EXPOSÉ DÉTAILLE DE MODES DE RÉALISATION

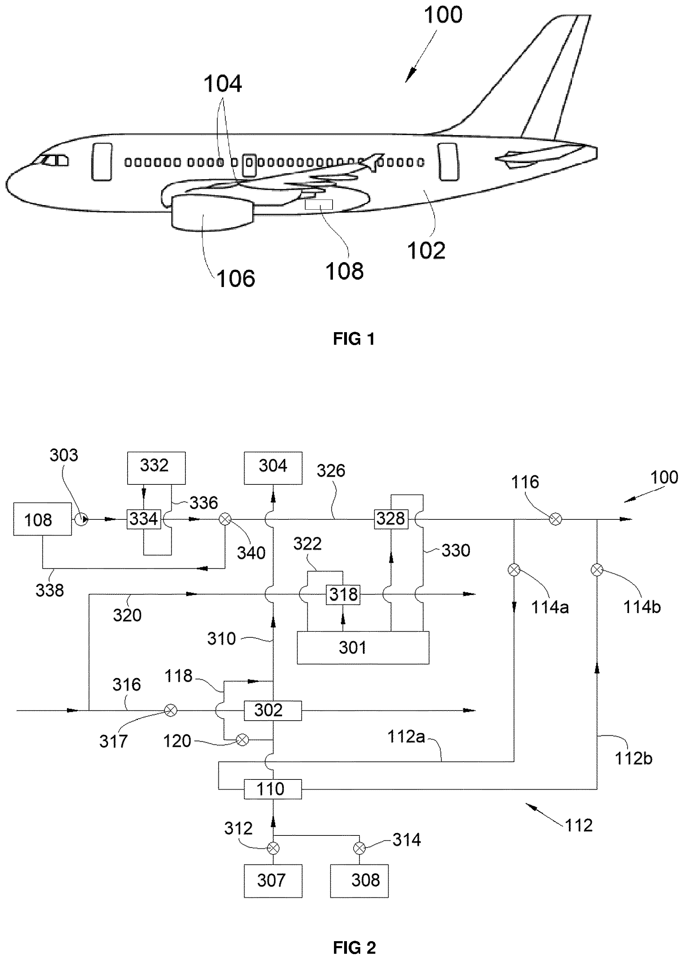

La figure 1 montre schématiquement un aéronef 100 selon l'invention qui comporte un fuselage 102 à l'intérieur duquel est délimitée une cabine incluant l'espace où sont assis les passagers et le cockpit. L'aéronef 100 comporte également des moyens de dégivrage par exemple pour dégivrer les ailes. La cabine et les moyens de dégivrage constituent des dispositifs à chauffer 104. Bien sûr d'autres éléments de l'aéronef 100 peuvent être intégrés à ces dispositifs à chauffer 104.

L'aéronef 100 comporte également au moins un système de propulsion 106 comportant un moteur 301 incorporant entre autres une boîte de transmission, et prenant la forme d'un turboréacteur ou d'un turbopropulseur fonctionnant avec un carburant tel que du kérosène ou du dihydrogène qui est stocké dans un réservoir de carburant 108 disposé par exemple dans les ailes.

Dans la description qui suit les éléments fonctionnels qui sont communs au mode de réalisation selon l'invention et au mode de réalisation de l'état de la technique portent les mêmes références.

La figure 2 est une représentation schématique d'un aéronef 100 selon l'invention.

Comme pour l'état de la technique, l'aéronef 100 comporte un système de conditionnement d'air qui prélève de l'air chaud au niveau du moteur 301, qui régule la température de l'air ainsi prélevé et qui envoie l'air ainsi régulé vers les dispositifs à chauffer 304, dont la cabine, pour en réguler la température et les moyens de dégivrage.

Le moteur 301 comporte également une soufflante disposée dans un canal de soufflante et destinée à générer un flux d'air dans le turboréacteur 301 et un compresseur moteur avec un compresseur basse pression en aval de la soufflante et un compresseur haute pression en aval du compresseur basse pression, et une turbine moteur avec une turbine haute pression en aval du compresseur haute pression, et une turbine basse pression en aval de la turbine haute pression, ainsi qu'une chambre de combustion entre le compresseur haute pression et la turbine haute pression où le carburant est mélangé à l'air afin d'y être brûlé.

Le compresseur haute pression comporte plusieurs étages de compression où la pression augmente, de l'amont vers l'aval selon la direction de déplacement, d'une basse pression au niveau du premier étage, à une haute pression au niveau du dernier étage, en passant par des pressions intermédiaires dans les étages intermédiaires.

Le système de conditionnement d'air comporte un premier échangeur thermique 302, une première prise d'air 307 destinée à prélever, dans le compresseur haute pression, de l'air à basse pression ou à pression intermédiaire, une deuxième prise d'air 308 destinée à prélever, dans le compresseur haute pression, de l'air à haute pression.

Le système de conditionnement d'air comporte également une première canalisation 310 qui traverse le premier échangeur thermique 302 et alimente les dispositifs à chauffer 304 en aval du premier échangeur thermique 302 par rapport au sens du flux d'air dans la première canalisation 310. En amont du premier échangeur thermique 302 par rapport au sens du flux d'air dans la première canalisation 310, la première canalisation 310 se divise en deux sous-canalisations, dont l'une est fluidiquement connectée à la première prise d'air 307 et dont l'autre est fluidiquement connectée à la deuxième prise d'air 308. Chaque sous-canalisation est ici équipée d'une vanne 312, 314 qui permet de réguler le passage de l'air provenant de chaque prise d'air 307, 308 en fonction des besoins de l'aéronef 100 et à cette fin, l'aéronef 100 comporte une unité de contrôle destinée à commander les vannes 312 et 314 en ouverture et en fermeture.

Le système de conditionnement d'air comporte également une première canalisation d'air 316 qui alimente le premier échangeur thermique 302 avec de l'air prélevé dans le canal de soufflante et, après avoir traversé le premier échangeur thermique 302, rejette l'air à l'extérieur.

Ainsi, l'air chaud prélevé au niveau des prises d'air 307 et 308 est refroidi au passage à travers le premier échangeur thermique 302 par l'air frais prélevé au niveau du canal de soufflante qui est alors réchauffé et rejeté vers l'extérieur, tandis que l'air refroidi est dirigé vers les dispositifs à chauffer 304 à travers la première canalisation 310.

Afin d'assurer le refroidissement du turboréacteur 301, l'aéronef 100 comporte un deuxième échangeur thermique 318 qui est destiné à effectuer un échange thermique entre un flux d'air provenant du canal de soufflante et un flux d'huile provenant du turboréacteur 301.

À cette fin, l'aéronef 100 comporte une deuxième canalisation d'air 320 qui prélève de l'air dans le canal de soufflante pour alimenter le deuxième échangeur thermique 318, et un premier circuit d'huile 322 prélevant de l'huile du turboréacteur 301 et réinjectant cette huile après passage à travers le deuxième échangeur thermique 318.

Ainsi, l'huile chaude prélevée au niveau du turboréacteur 301 est refroidie au passage à travers le deuxième échangeur thermique 318 par l'air frais prélevé au niveau du canal de soufflante qui est alors réchauffé et rejeté vers l'extérieur, tandis que l'huile refroidie est dirigée vers le turboréacteur 301.

L'aéronef 100 comporte une canalisation de carburant 326 qui alimente la chambre de combustion du turboréacteur 301 à partir du réservoir de carburant 108. Une pompe 303 est agencée en sortie du réservoir de carburant 108 pour entraîner le carburant dans la canalisation de carburant 326.

Afin d'assurer un meilleur refroidissement du turboréacteur 301, l'aéronef 100 comporte un troisième échangeur thermique 328 qui est destiné à effectuer un échange thermique entre le carburant provenant du réservoir de carburant 108 et un flux d'huile provenant du turboréacteur 301.

À cette fin, la canalisation de carburant 326 prélève du carburant dans le réservoir de carburant 108 pour alimenter le troisième échangeur thermique 328, et un deuxième circuit d'huile 330 prélevant de l'huile du turboréacteur 301 et réinjectant cette huile après passage à travers le troisième échangeur thermique 328.

Ainsi, l'huile chaude prélevée au niveau du turboréacteur 301 est refroidie au passage à travers le troisième échangeur thermique 328 par le carburant prélevé dans le réservoir de carburant 108 qui est alors réchauffé et acheminé vers la chambre de combustion, tandis que l'huile refroidie est dirigée vers le turboréacteur 301.

L'aéronef 100 comporte également un générateur électrique 332 et pour assurer le refroidissement du générateur électrique 332, l'aéronef 100 comporte un quatrième échangeur thermique 334 qui est destiné à effectuer un échange thermique entre le carburant provenant du réservoir de carburant 108 et un flux d'huile provenant du générateur électrique 332.

À cette fin, la canalisation de carburant 326 prélève du carburant dans le réservoir de carburant 108 pour alimenter le quatrième échangeur thermique 334, et un troisième circuit d'huile 336 prélevant de l'huile du générateur électrique 332 et réinjectant cette huile après passage à travers le quatrième échangeur thermique 334.

Ainsi, l'huile chaude prélevée au niveau du générateur électrique 332 est refroidie au passage à travers le quatrième échangeur thermique 334 par le carburant prélevé dans le réservoir de carburant 108 qui est alors réchauffé et acheminé vers la chambre de combustion, tandis que l'huile refroidie est dirigée vers le générateur électrique 332.

Dans le mode de réalisation présenté ici, le quatrième échangeur thermique 334 est en amont du troisième échangeur thermique 328 par rapport au sens du flux de carburant dans la canalisation de carburant 326, et cette dernière traverse donc successivement le quatrième échangeur thermique 334 puis le troisième échangeur thermique 328 avant de rejoindre la chambre de combustion, mais une organisation différente est possible.

L'aéronef 100 comporte également une canalisation de retour 338 fluidiquement connectée entre la canalisation de carburant 326 et le réservoir de carburant 108 au niveau d'une vanne 340 installée sur la canalisation de carburant 326 entre le quatrième échangeur thermique 334 et le troisième échangeur thermique 328 et commandée en ouverture et fermeture par l'unité de contrôle. Ainsi, le carburant peut refroidir l'huile du générateur électrique 332 et retourner dans le réservoir de carburant 108 sans que le carburant soit envoyé vers la chambre de combustion.

L'aéronef 100 comporte également un échangeur thermique additionnel 110 qui est installé sur la première canalisation 310 en amont du premier échangeur thermique 302 et en aval des prises d'air 307 et 308 par rapport au sens du flux d'air dans la première canalisation 310, c'est-à-dire entre le premier échangeur thermique 302 et les prises d'air 307 et 308. Ainsi, l'air provenant des prises d'air 307 et 308 traverse successivement l'échangeur thermique additionnel 110 puis le premier échangeur thermique 302 avant de rejoindre les dispositifs à chauffer 304.

L'aéronef 100 comporte également une canalisation de dérivation 112 dont une première branche 112a est fluidiquement connectée entre la canalisation de carburant 326 et une entrée de l' échangeur thermique additionnel 110 et dont une deuxième branche 112b est fluidiquement connectée entre une sortie de l'échangeur thermique additionnel 110 et la canalisation de carburant 326.

La connexion de la première branche 112a sur la canalisation de carburant 326 est en amont de la connexion de la deuxième branche 112b sur la canalisation de carburant 326 par rapport au sens d'écoulement du carburant dans la canalisation de carburant 326.

Ainsi, préalablement au passage dans le premier échangeur 302, l'air provenant des prises d'air 307 et 308 est refroidi par le passage dans l'échangeur thermique additionnel 110, et préalablement à son injection dans la chambre de combustion, le carburant est réchauffé en passant à travers l'échangeur thermique additionnel 110 en suivant successivement la canalisation de carburant 326 depuis le réservoir de carburant 108, la canalisation de dérivation 112, en passant successivement par la première branche 112a, l'échangeur thermique additionnel 110, la deuxième branche 112b, et son retour dans la canalisation de carburant 326 pour rejoindre la chambre de combustion.

Dans le mode de réalisation de l'invention présenté sur la figure 2, les connexions de la canalisation de dérivation 112 sur la canalisation de carburant 326 sont en aval du troisième échangeur thermique 328 et du quatrième échangeur thermique 334 par rapport au sens du flux de carburant dans la canalisation de carburant 326 mais une disposition différente est possible.

La mise en place de l'échangeur thermique additionnel 110 permet de réduire les dimensions du premier échangeur thermique 302 par rapport à celle de l'état de la technique et donc d'avoir un encombrement moindre.

La température du carburant transitant dans l'échangeur thermique additionnel 110 est inférieure à la température de l'air transitant dans le premier échangeur thermique 302 assurant ainsi une baisse de température de l'air destiné aux dispositifs à chauffer 304 plus importante. Dans le même temps, l'augmentation de la température du carburant avant sa combustion permet d'accroître son rendement.

En outre, la réduction de la quantité d'air prélevé dans le canal de soufflante pour refroidir l'air destiné aux dispositifs à chauffer 304 permet une augmentation des performances du moteur 301.

Pour faciliter la gestion de la quantité de carburant transitant dans la canalisation de dérivation 112, chaque branche 112a-b de la canalisation de dérivation 112 est équipée d'une vanne 114a-b installée sur la branche 112a-b considérée et commandée en ouverture et fermeture par l'unité de contrôle.

Pour parfaire la gestion de la quantité de carburant, entre les connexions de la canalisation de dérivation 112 sur la canalisation de carburant 326, la canalisation de carburant 326 est équipée d'une vanne 116 commandée en ouverture et fermeture par l'unité de contrôle.

Dans le cas où la baisse de température de l'air destiné aux dispositifs à chauffer 304 est suffisante avec uniquement l'échangeur thermique additionnel 110, une canalisation de contournement 118 est mise en place sur la première canalisation 310 fluidiquement connectée de part et d'autre du premier échangeur thermique 302. Une vanne 120 est mise en place sur la canalisation de contournement 118 et elle est commandée en ouverture et fermeture par l'unité de contrôle.

Pour réguler le débit d'air entrant dans le premier échangeur thermique 302 et limiter le prélèvement au niveau du canal de soufflante, la première canalisation d'air 316 est équipée, à l'entrée dudit premier échangeur thermique 302, d'une vanne 317 installée sur la première canalisation d'air 316 et commandée en ouverture et fermeture par l'unité de contrôle.

Ainsi, lorsque la vanne 120 est fermée, l'air sortant de l'échangeur thermique additionnel 110 traverse le premier échangeur thermique 302 pour subir un refroidissement plus important, et lorsque la vanne 120 est ouverte, l'air sortant de l'échangeur thermique additionnel 110 s'écoule directement vers les dispositifs à chauffer 304 à travers la canalisation de contournement 118 puis la première canalisation 310.

## Revendications

1. Aéronef (100) comportant :
- un moteur (301) comportant un compresseur haute pression à plusieurs étages de compression, une chambre de combustion et un canal de soufflante,
- un réservoir de carburant (108) contenant du carburant,
- des dispositifs à chauffer (304),
- une première prise d'air (307) destinée à prélever, dans le compresseur haute pression, de l'air à une basse pression ou à une pression intermédiaire, une deuxième prise d'air (308) destinée à prélever, dans le compresseur haute pression, de l'air à une haute pression,
- un premier échangeur thermique (302),
- une première canalisation (310) qui traverse le premier échangeur thermique (302) et alimente les dispositifs à chauffer (304) en aval du premier échangeur thermique (302), où en amont du premier échangeur thermique (302), la première canalisation (310) se divise en deux sous-canalisations, dont l'une est fluidiquement connectée à la première prise d'air (307) et dont l'autre est fluidiquement connectée à la deuxième prise d'air (308),
- une canalisation de carburant (326) fluidiquement connectée entre le réservoir de carburant (108) et la chambre de combustion du moteur (301), et
- une première canalisation d'air (316) qui alimente le premier échangeur thermique (302) avec de l'air prélevé dans le canal de soufflante,
- un échangeur thermique additionnel (110) installé sur la première canalisation (310) en amont du premier échangeur thermique (302) et en aval des prises d'air (307, 308),
- une canalisation de dérivation (112) dont une première branche (112a) est fluidiquement connectée entre la canalisation de carburant (326) et une entrée de l'échangeur thermique additionnel (110) et dont une deuxième branche (112b) est fluidiquement connectée entre une sortie de l'échangeur thermique additionnel (110) et la canalisation de carburant (326), et
- une canalisation de contournement (118) mise en place sur la première canalisation (310) fluidiquement connectée de part et d'autre du premier échangeur thermique (302), et une vanne (120) mise en place sur la canalisation de contournement (118) et commandée en ouverture et fermeture.

2. Aéronef (100) selon la revendication 1, **caractérisé en ce que** la connexion de la première branche (112a) sur la canalisation de carburant (326) est en amont de la connexion de la deuxième branche (112b) sur la canalisation de carburant (326) par rapport au sens d'écoulement du carburant dans la canalisation de carburant (326).

3. Aéronef (100) selon la revendication 2, **caractérisé en ce que** chaque branche (112a-b) de la canalisation de dérivation (112) est équipée d'une vanne (114a-b) installée sur ladite branche (112a-b) et commandée en ouverture et fermeture.

4. Aéronef (100) selon la revendication 3, **caractérisé en ce que**, entre les connexions de la canalisation de dérivation (112) sur la canalisation de carburant (326), la canalisation de carburant (326) est équipée d'une vanne (116) commandée en ouverture et fermeture.

## Patentansprüche

1. Luftfahrzeug (100), welches umfasst:
- ein Triebwerk (301), das einen Hochdruckverdichter mit mehreren Verdichtungsstufen, eine Brennkammer und einen Gebläsekanal umfasst,
- einen Kraftstofftank (108), der Kraftstoff enthält,
- zu erwärmende Vorrichtungen (304),
- einen ersten Lufteinlass (307), der dazu bestimmt ist, im Hochdruckverdichter Luft mit einem niedrigen Druck oder mit einem mittleren Druck zu entnehmen, einen zweiten Lufteinlass (308), der dazu bestimmt ist, im Hochdruckverdichter Luft mit einem hohen Druck zu entnehmen,
- einen ersten Wärmetauscher (302),
- eine erste Rohrleitung (310), welche den ersten Wärmetauscher (302) durchquert und die zu erwärmenden Vorrichtungen (304) stromabwärts des ersten Wärmetauschers (302) versorgt, wobei stromaufwärts des ersten Wärmetauschers (302) die erste Rohrleitung (310) in zwei Teilrohrleitungen aufgeteilt ist, von denen eine mit dem ersten Lufteinlass (307) in Fluidverbindung steht und von denen die andere mit dem zweiten Lufteinlass (308) in Fluidverbindung steht,
- eine Kraftstoffleitung (326), die eine Fluidverbindung zwischen dem Kraftstofftank (108) und der Brennkammer des Triebwerks (301) herstellt, und
- eine erste Luftleitung (316), welche den ersten Wärmetauscher (302) mit Frischluft versorgt, die im Gebläsekanal entnommen wurde,
- einen zusätzlichen Wärmetauscher (110), der an der ersten Rohrleitung (310) stromaufwärts des ersten Wärmetauschers (302) und stromabwärts der Lufteinlässe (307, 308) installiert ist,
- eine Abzweigleitung (112), von der ein erster Zweig (112a) eine Fluidverbindung zwischen der Kraftstoffleitung (326) und einem Eingang des zusätzlichen Wärmetauschers (110) herstellt und von der ein zweiter Zweig (112b) eine Fluidverbindung zwischen einem Ausgang des zusätzlichen Wärmetauschers (110) und der Kraftstoffleitung (326) herstellt, und
- eine Bypassleitung (118), die an der ersten Rohrleitung (310) angebracht und beiderseits des ersten Wärmetauschers (302) fluidisch angeschlossen ist, und ein Ventil (120), das an der Bypassleitung (118) angebracht ist und zum Öffnen und Schließen gesteuert wird.

2. Luftfahrzeug (100) nach Anspruch 1, **dadurch gekennzeichnet, dass** sich der Anschluss des ersten Zweiges (112a) an die Kraftstoffleitung (326) stromaufwärts des Anschlusses des zweiten Zweiges (112b) an die Kraftstoffleitung (326) befindet, bezogen auf die Strömungsrichtung des Kraftstoffs in der Kraftstoffleitung (326).

3. Luftfahrzeug (100) nach Anspruch 2, **dadurch gekennzeichnet, dass** jeder Zweig (112a-b) der Abzweigleitung (112) mit einem Ventil (114a-b) ausgestattet ist, das an dem Zweig (112a-b) installiert ist und zum Öffnen und Schließen gesteuert wird.

4. Luftfahrzeug (100) nach Anspruch 3, **dadurch gekennzeichnet, dass** die Kraftstoffleitung (326) zwischen den Anschlüssen der Abzweigleitung (112) an die Kraftstoffleitung (326) mit einem Ventil (116) ausgestattet ist, das zum Öffnen und Schließen gesteuert wird.

## Claims

1. Aircraft (100) having:
- an engine (301) having a high-pressure compressor with multiple compression stages, a combustion chamber and a fan duct,
- a fuel tank (108) containing fuel,
- devices (304) to be heated,
- a first air intake (307) intended to draw, from the high-pressure compressor, air at a low pressure or at an intermediate pressure, a second air intake (308) intended to draw, from the high-pressure compressor, air at a high pressure,
- a first heat exchanger (302),
- a first pipe (310) which passes through the first heat exchanger (302) and feeds the devices (304) to be heated downstream of the first heat exchanger (302), wherein, upstream of the first heat exchanger (302), the first pipe (310) is divided into two sub-pipes, one of which is fluidically connected to the first air intake (307) and the other of which is fluidically connected to the second air intake (308),
- a fuel pipe (326) fluidically connected between the fuel tank (108) and the combustion chamber of the engine (301), and
- a first air pipe (316) which feeds the first heat exchanger (302) with air drawn from the fan duct,
- an additional heat exchanger (110) installed on the first pipe (310) upstream of the first heat exchanger (302) and downstream of the air intakes (307, 308),
- a diversion pipe (112), a first branch (112a) of which is fluidically connected between the fuel pipe (326) and an inlet of the additional heat exchanger (110) and a second branch (112b) of which is fluidically connected between an outlet of the additional heat exchanger (110) and the fuel pipe (326), and
- a bypass pipe (118) fitted on the first pipe (310) and fluidically connected on either side of the first heat exchanger (302), and a valve (120) fitted on the bypass pipe (118) and commanded to open and close.

2. Aircraft (100) according to Claim 1, **characterized in that** the connection of the first branch (112a) to the fuel pipe (326) is upstream of the connection of the second branch (112b) to the fuel pipe (326) in relation to the direction of flow of the fuel in the fuel pipe (326) .

3. Aircraft (100) according to Claim 2, **characterized in that** each branch (112a-b) of the diversion pipe (112) is equipped with a valve (114a-b) installed on said branch (112a-b) and commanded to open and close.

4. Aircraft (100) according to Claim 3, **characterized in that**, between the connections of the diversion pipe (112) to the fuel pipe (326), the fuel pipe (326) is equipped with a valve (116) commanded to open and close.
